# EUROPEAN PATENT APPLICATION

(11) **EP 2 589 476 A1**
(43) Date of publication of application: **08.05.2013**
(21) Application number: 10854100.4
(22) Date of filing: 01.07.2010
(51) Int. Cl.: B29C 39/26, B29C 33/38, B29C 33/76, B29C 39/02, G09B 23/30, B29L 22/00

(54) **METHOD FOR PRODUCING RESIN MOLDED BODY OF HOLLOW STRUCTURE BODY, AND CORE**

(71) Applicant: Crosseffect Inc., Kyoto 612-8443 (JP)
(72) Inventor: TAKEDA, Masatoshi, Kyoto-shi Kyoto 612-8443 (JP); HATANAKA, Katsunori, Kyoto-shi Kyoto 612-8443 (JP); TOKIWA, Shinichi, Kyoto-shi Kyoto 612-8443 (JP); KITAMURA, Yasuhiko, Kyoto-shi Kyoto 612-8443 (JP); SHIRAISHI, Isao, Suita-shi Osaka 565-0855 (JP)
(74) Representative: Hoeger, Stellrecht & Partner Patentanwälte
(86) International application number: PCT/JP2010/061249
(87) International publication number: WO 2012/001803

(57) **Abstract**

The present invention is a method for producing a resin-molded body for a hollow structure having a cavity and an opening connecting the cavity and the outside. The method includes the steps of: creating a hollow core corresponding to the shape of the cavity; creating an outer mold corresponding to the external shape of the hollow structure; setting the core in the outer mold and injecting a fluid of a soft-resin material into the space between the outer mold and the core; demolding a soft-resin-molded body together with the core from the outer mold after the soft-resin-molded body is formed by curing the soft-resin material, applying an external force to the soft-resin-molded body to deform the soft-resin-molded body so as to break the core into fragments; and discharging the fragments of the core through the opening of the soft-resin-molded body to the outside.

## Description

### TECHNICAL FIELD

The present invention relates to a method for producing a resin-molded body of a hollow structure and a core used in the method. More specifically, it relates to a method for producing a resin-molded body of a hollow structure having a complex internal shape, and a core suitable for the method.

### BACKGROUND ART

It is often the case that a hollow structure having a complex internal shape cannot be created by integral molding because of the limited draft angle or for other reasons. Therefore, its production process normally includes the steps of creating a plurality of partially molded components and making them adhere to each other in a later step to complete a single body. However, a resin-molded product consisting of a plurality of parts adhered to each other requires many different molds and a large number of production steps, which increases its production cost. It also has the problem of being weaker at the adhered portions than at other portions. For a molded product made of a soft resin, the development of an integrally molded product is particularly desired since using a plurality of parts in a soft-resin-molded product causes variances not only in strength but also in elasticity, tactile sensation, texture and other qualities between the adhered portion and other portions.

In a cardiac surgical operation or other medial areas which require high levels of skill and competent experience, it is difficult to give poorly skilled physicians the chance to have clinical experience. Such physicians are normally made to learn necessary skills through a surgical training using a heart model. Even skilled physicians use heart models to perform a pre-operative simulation in order to check the location of the affected site or determine the area to be resected.

However, no heart model whose elasticity, texture, strength or other qualities are similar to those of the actual heart has been successfully developed. This is due to the fact that the internal shape as well as the external shape of the heart is extremely complex and it is difficult to create an integrally molded resin product for such shapes (see Patent Document 1). Such a problem is common to other kinds of organs as well as the heart, although the problem is particularly noticeable in the case of the heart or other organs having a complex external and/or internal shape.

### BACKGROUND ART DOCUMENT

### PATENT DOCUMENT

Patent Document 1: JP-A 2005-128134

### SUMMARY OF THE INVENTION

### PROBLEM TO BE SOLVED BY THE INVENTION

Accordingly, the problem to be solved by the present invention is to provide a method for producing a resin-molded body that can be integrally molded even in the case of a hollow structure having a complex internal shape, and a core suitable for the method.

### MEANS FOR SOLVING THE PROBLEMS

The first aspect of the present invention aimed at solving the aforementioned problem is a method for producing a resin-molded product for a hollow structure having a cavity and an opening connecting the cavity and the outside, including the steps of:
a) creating a hollow core corresponding to the shape of the cavity;
b) creating an outer mold corresponding to the external shape of the hollow structure;
c) setting the core in the outer mold and injecting a fluid of a soft-resin material into the space formed between the outer mold and the core;
d) demolding a soft-resin-molded body together with the core from the outer mold after the soft-resin-molded body is formed by hardening the soft-resin material;
e) applying an external force to the soft-resin-molded body to deform the soft-resin-molded body so as to make the core smaller in size so that the core can pass through the opening; and
f) discharging the core through the opening of the soft-resin-molded body to the outside after making the core smaller in size.

The second aspect of the present invention is characterized in that the step of applying an external force to the soft-resin-molded body to deform the soft-resin-molded body is performed in such a manner as to break the core into small pieces that can pass through the opening.

In the first and second aspects of the present invention, the strength of the core may preferably be set at a level that allows an operator to manually change the shape of the core. This setting allows the operator to change the shape of the core by deforming the soft-resin-molded body by manually compressing or grasping the soft-resin-molded body.

In a preferable mode of the present invention, a three-dimensional data of the cavity is created, and the core is created from a light-curing resin by a laser prototyping process based on the three-dimensional data. The three-dimensional data may preferably be created from a tomographic data obtained by an MRI or CT scan of the hollow structure.

The outer mold may be created by the steps of preparing three-dimensional data of the external shape of the hollow structure, creating a light-curing resin-molded body having the same external shape as that of the hollow structure by a laser prototyping process based on the three-dimensional data, setting the light-curing resin-molded body in an outer frame, injecting a synthetic resin into the space between the outer frame and the light-curing resin-molded body, and extracting the light-curing resin-molded body after the synthetic resin is cured.

In this case, the three-dimensional data of the external shape of the hollow structure may preferably be created from a tomographic data obtained by an MRI or CT scan of the hollow structure.

The third aspect of the present invention is a hollow core used for producing a resin-molded body of a hollow structure, the core being designed to be set in an outer mold so as to produce the resin-molded body by injecting a fluid soft-resin material into the space between the outer mold and the core and hardening the soft-resin material, wherein the core can be made to be smaller in size so that the core can pass through the opening by applying an external force to the soft-resin-molded body.

The fourth aspect of the present invention is one mode of the third aspect of the present invention and is characterized in that applying an external force to the soft-resin-molded body to deform the soft-resin-molded body can break the core into small pieces that can pass through the opening.

### EFFECT OF THE INVENTION

In the production method according to the present invention, the core is made to be smaller in size, or broken into small pieces, and is discharged through the opening of the soft-resin-molded body to the outside, so that even a hollow structure having a complex internal shape can be integrally molded. Accordingly, an appropriate kind of soft-resin material can be chosen to create a soft-resin-molded body that resembles the hollow structure in elasticity, texture and tactile sensation. In this case, if the strength of the core is set at a level that allows an operator to change the shape of the core or break it into pieces by manually applying a force, it will be unnecessary to provide a special device for applying an external force to the soft-resin-molded body to change the shape of the core or break it into pieces.

In the case of creating a soft-resin-molded body of a patient's heart by the production method according to the present invention, a custom-made heart model can be obtained by creating three-dimensional data of the internal and/or external shape of the heart by using tomographic data obtained by an MRI or CT scan of the patient. Using this heart model in a pre-operative simulation enables physicians to previously detect an abnormality in the patient's heart.

### BRIEF DESCRIPTION OF THE DRAWINGS

Fig. 1 is a perspective view of a soft-resin-molded body according to one embodiment of the present invention.
Fig. 2 is a diagram showing a process of producing a soft-resin-molded body.
Fig. 3 is a diagram illustrating the process of breaking a core into pieces by deforming the soft-resin-molded body by applying an external force.
Fig. 4 is a physical-property table of a light-curing resin used for a master model and a core in the production of a soft-resin-molded model of a pediatric heart according to one example of the present invention.
Fig. 5 is an appearance photograph of the master model.
Fig. 6 is an appearance photograph of an outer mold.
Figs. 7A and 7B are appearance photographs of a core viewed from two different directions.
Fig. 8 is an appearance photograph of a heart model.
Fig. 9 is a photograph showing one phase of a simulation using a heart model.

### BEST MODE FOR CARRYING OUT THE INVENTION

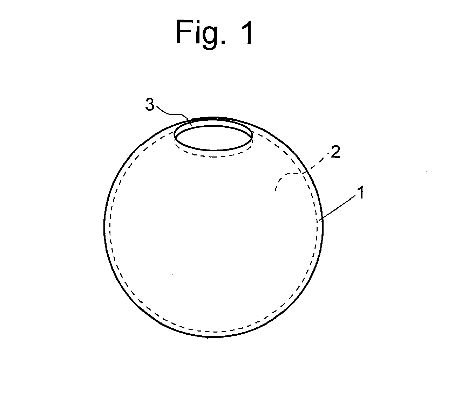

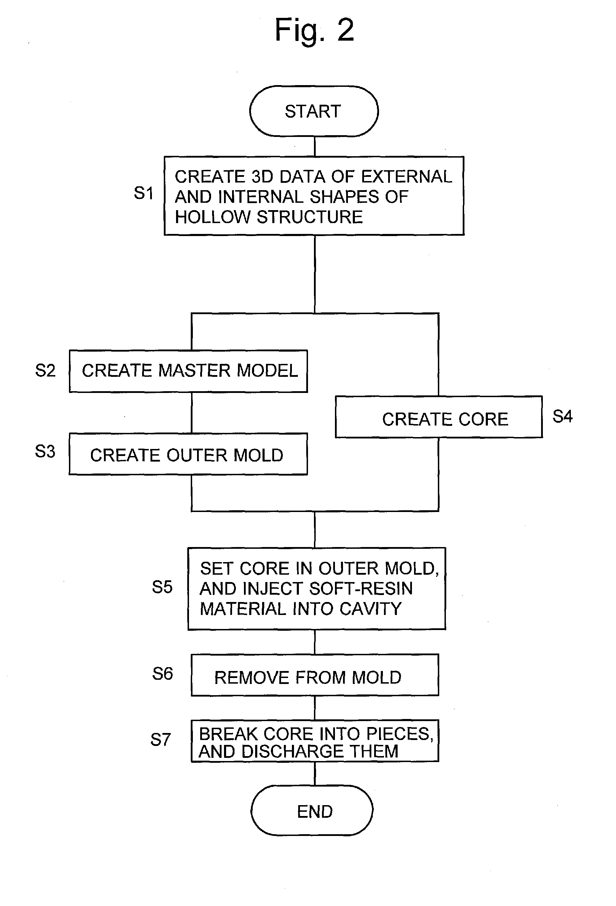

A method for producing a resin-molded body according to one embodiment of the present invention is hereinafter described with reference to the drawings. Fig. 1 is an external view of a soft-resin-molded body of a hollow structure according to the present embodiment, and Fig. 2 shows a process of producing the soft-resin-molded body. The soft-resin-molded body 1 has a cavity 2 and an opening 3 connecting this cavity 2 and the outside. The soft-resin-molded body 1 is made of a soft-resin material and can be easily deformed by manually applying an external force.

A method for producing the soft-resin-molded body 1 is hereinafter described. A three-dimensional data of the external shape and the cavity shape (internal shape) of a hollow structure to be molded is created (S1). For example, the three-dimensional data of the external and internal shapes can be created from tomographic data of the hollow structure obtained by an MRI (Magnetic Resonance Imaging) or CT (Computed Tomography) scan.
Then, an outer mold and a core are respectively created on the basis of the obtained three-dimensional data of the external and internal shapes.

### (Creation of Outer Mold)

The tomographic data of the hollow structure are converted into lamination data (three-dimensional data) necessary for laser prototyping, and based on the lamination data, a light-curing resin-molded body (master model) is created by a laser prototyping process (S2). More specifically, based on the lamination data, a laser beam is thrown into the fluid light-curing resin to form solid layers of the light-curing resin, and such layers are sequentially laminated to obtain a master model. In this process, the parting lines, gates and other portions are designated according to the external shape of the hollow structure. Creating a master model by a laser prototyping process using a tomographic data in this manner eliminates the need of preparing a mold for the master model. The use of a laser prototyping process for the master-model creation makes it possible to decrease the amount of resin material for the master model by giving a hollow shape to master model similar to the hollow structure.

Next, the master model is set in a molding frame, and a fluid synthetic resin is poured into the molding frame and cured. Subsequently, the synthetic-resin-molded body made of the cured synthetic resin in the molding frame is removed from the same frame and cut at the parting lines to separate the master model. Thus, an outer mold composed of a plurality of split molds is completed (S3). The fluid synthetic resin may be any of the thermosetting resins, thermoplastic resins, or room-temperature curing resins.

### (Creation of Core)

From the tomographic data of the hollow structure, the contour of the cavity is determined and then converted into lamination data (three-dimensional data) for the core with a predetermined thickness added inwards. Then, based on this lamination data, a hollow core made of a light-curing resin is created by a laser prototyping process (S4).

### (Formation of Soft-Resin-Molded body)

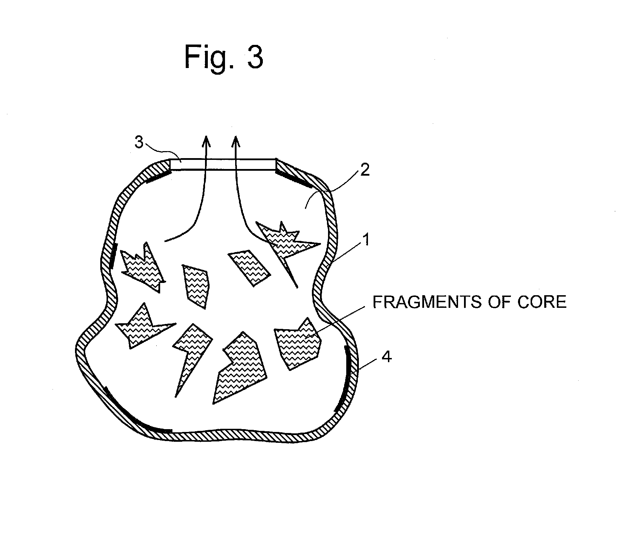

Next, the core is set in the outer mold, a fluid soft-resin material is supplied into the space between the outer mold and the core, and this material is hardened. Subsequently, the outer mold is removed to obtain a soft-resin-molded body 1 with the core contained therein. In this state, the soft-resin-molded body 1 is deformed by applying an external force, whereby the internal core is broken into pieces, which are discharged through the opening of the soft-resin-molded body 1 to the outside. Fig. 3 is a diagram schematically showing the soft-resin-molded body 1 deformed by an external force. The deformation of the soft-resin-molded body 1 causes the core 4 to be broken into pieces, coming off the inner surface of the soft-resin-molded body 1. If any fragment of the core 4 is larger than the opening 3, an additional external force can be applied to the soft-resin-molded body 1 to further deform this body 1 so that the core 4 will be broken into smaller pieces that can be discharged through the opening 3.

Thus, a hollow soft-resin-molded body 1 is obtained. The soft-resin material may be any of the thermosetting resins, thermoplastic resins, and room-temperature curing resins. The injection of the fluid soft-resin material into the space between the outer mold and the core may preferably be achieved by vacuum casting.

### EXAMPLE

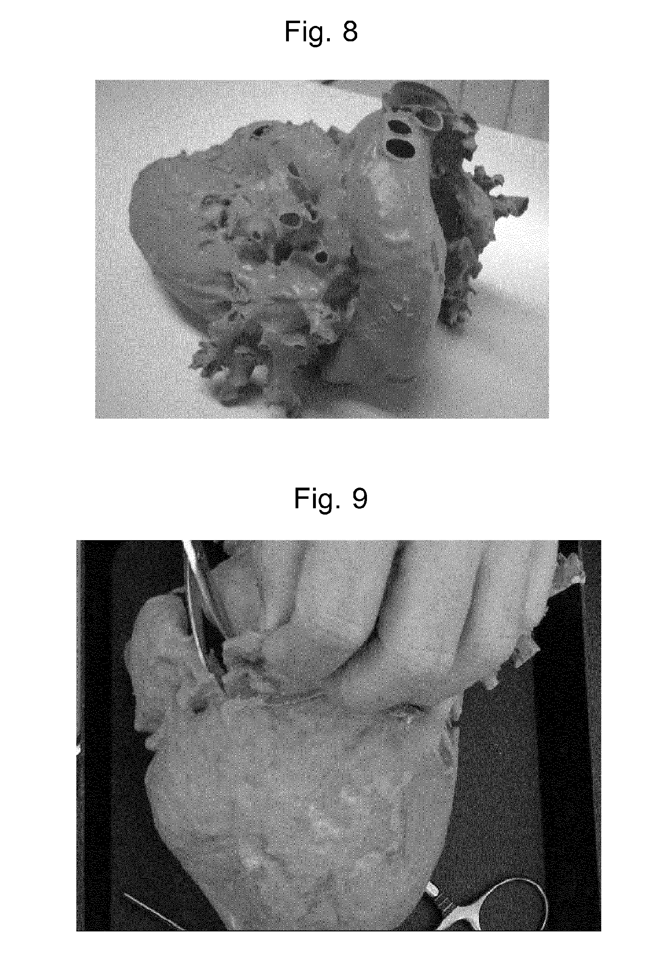

A specific example in which the present invention was applied to the production of a soft-resin-molded model of a pediatric heart is hereinafter described. The following description assumes that the pediatric heart includes right and left atriums, right and left ventricles, as well as a portion of arteries (aortas and pulmonary arteries) and veins (large veins and pulmonary veins) leading to the atriums and ventricles. The atriums, ventricles and the aforementioned portion of the arteries and veins correspond to the cavity of the present invention. Each of the openings at the ends or in the middle of the arteries and veins corresponds to the "opening connecting the cavity and the outside." These openings are formed by cutting an artery or vein in the middle thereof, or by cutting a blood capillary branching from an artery or vein (see Fig. 8).
Initially, tomographic data (DICOM [Digital Imaging and Communication in Medicine] data) of the heart of a pediatric patient, which was outputted from an MSCT (Multi-Slice X-ray Computed Tomography) system, was converted into laser prototyping data (SLT data). Then, the laser prototyping data was processed to remove blood-capillary data, which was unnecessary for the creation of a resin-molded model of a pediatric heart (this model is hereinafter referred to as the "pediatric heart model").

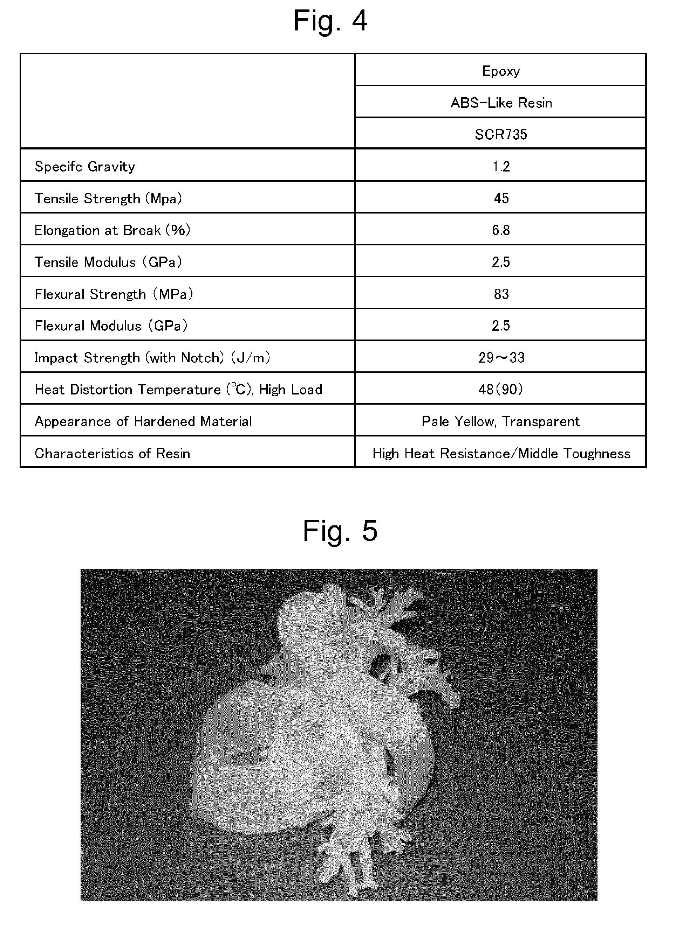

Based on the data from which the blood-capillary data had been removed, a master model of the pediatric heart model was created by a laser prototyping process using a light-curing resin as the material. An ABS-like heat-resistant epoxy resin, SCR735 (produced by JSR Corporation), was used as the light-curing resin. Fig. 4 shows a physical-property table of this light-curing resin. Fig. 5 shows an appearance of the obtained master model of the pediatric heart. In the present example, the master model is a hollow object in which all portions corresponding to the openings of the pediatric heart are closed, as shown in Fig. 5. The master model may be either a hollow object or solid object as long as its external shape is identical to that of the pediatric heart. Creating a hollow model as in the present example advantageously decreases the required amount of light-curing resin material and thereby reduces the production cost.

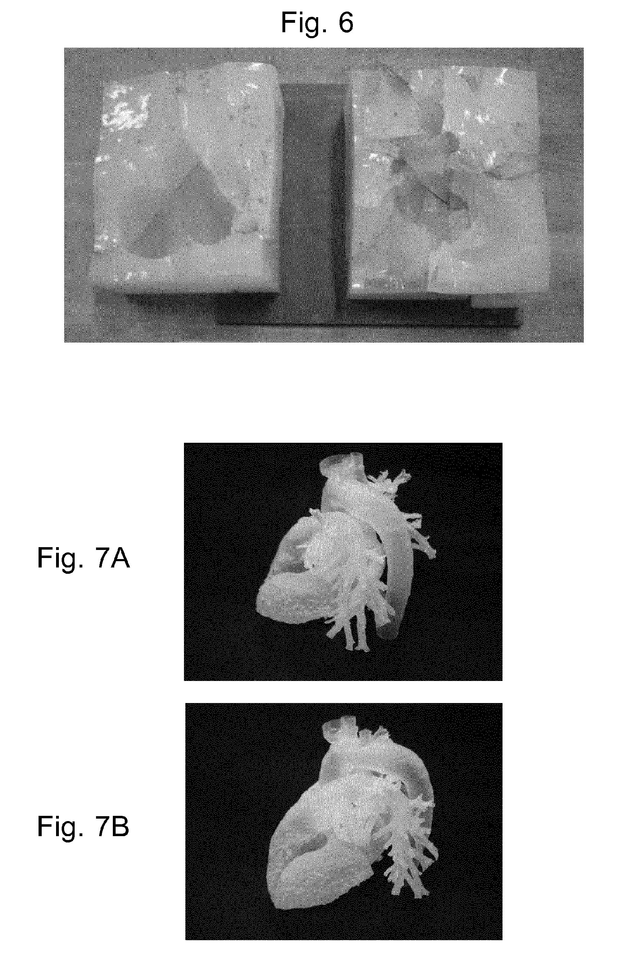

After this master model was set in an outer frame, a room-temperature curing silicon rubber (silicon RTV rubber, item code KE-1314-2, manufactured by Shin-Etsu Chemical Co., Ltd.) was injected into and cured in the space between the outer frame and the master model to complete an outer mold. The used silicon RTV rubber (item code KE-1314-2) has the rubber characteristics of high strength, high splitting, high stretching and semi-transparency. This rubber is suitable for a relatively complex moulage. An appearance of the obtained outer mold is shown in Fig. 6. The outer mold shown in Fig. 6 consists of two split molds.

Next, three-dimensional data of the contour shapes of the cavities of the heart (right and left atriums, and right and left ventricles) were created from a tomographic data of the pediatric heart. Then, laser prototyping data (SLT data) of the core was obtained by shifting the three-dimensional data by the thickness of the core. The thinner the core is, the easier the shape-changing (fragmentation) of the core is. However, too thin a core will be too fragile. Accordingly, it is preferable to set the thickness of the core by considering the tradeoff between the ease of shape-changing and the strength of the core, taking into account the kind of resin material. In the present example, the thickness of the core was selected within a range of 0.3-0.5 mm, e.g. 0.4 mm. Using this laser prototyping data, the core was created by a laser prototyping process. The light-curing resin material was the same as used for the master model. Figs. 7A and 7B show appearances of the core viewed from two different directions.

Subsequently, the core was set in the outer mold, and a fluid soft-resin material was poured into and cured in the space between the outer mold and the core in a vacuum. Then, the obtained pediatric heart model with the core was removed from the outer mold. As the soft-resin material, a three-component urethane resin for vacuum-casting (High Cast 3400N, manufactured by H&K Ltd.) was used, which had been prepared to achieve a hardness score of 30. An external force was applied to the pediatric heart model to deform this pediatric heart model so as to break the core into pieces. The resultant fragments of the core were discharged through any of the openings formed at the cut ends of the arteries and veins. An appearance of the obtained heart model is shown in Fig. 8.

A simulation of the open heart surgery performed by a physician using the obtained pediatric heart model demonstrated that the elasticity, tactile sensation and texture of the model were similar to those of actual pediatric hearts. It was also found that the internal shape of the pediatric heart was correctly reproduced. Fig. 9 shows one phase of the simulation using the pediatric heart model.

When the heart model obtained in the present example was opened, it was found that the fragments of the core were not completely discharged; a portion of the fragments remained inside the heart model. However, this did not cause any problem in the open heart simulation. Accordingly, it should be understood that the operation of "discharging the core through the opening of the soft-resin-molded body to the outside after making the core smaller in size" in the production method according to the present invention includes not only the case where the core which has been made to be smaller in size is completely discharged from the soft-resin molded body to the outside, but also the case where a portion of the core remains inside the soft-resin molded body.

The present invention is not limited to the previous embodiment and example. For example, the following variations are possible:
Different portions on the surface of the soft-resin-molded body may be painted in different colors, or the soft-resin-molded body may be created from a plurality of soft-resin materials previously colored with different dyes. For example, in the case of a heart model, if the surfaces of the atriums, ventricles, veins and arteries are respectively painted with different colors, or if these parts are respectively created using different soft-resin materials colored with different dyes, each part of the pediatric heart will be easily distinguishable from its appearance.

The soft-resin-molded body may be created from a plurality of soft-resin materials differing from each other in elasticity, tactile sensation and other properties in the cured state. For example, in the case of a heart model, if the atriums, ventricles, veins and arteries are respectively created from resin materials differing from each other in elasticity and/or other properties, it is possible to provide a heart model that is more approximate to the actual heart in elasticity, tactile sensation and/or other properties.

A soft-resin material containing a glass fiber, carbon fiber or similar filler may be used to create the soft-resin-molded body. In this case, a soft-resin-molded body with high mechanical strength will be obtained.
Unlike the previous embodiment and example in which the core was broken into pieces and the resultant fragments were discharged through the openings of the soft-resin-molded body to the outside, it is possible to (permanently) make the core smaller in size and discharge it through an opening of the soft-resin-molded body to the outside.

To facilitate the shape-changing or fragmentation of the core, a groove-like cutting line or lines may be formed on the inner and/or outer surface of the core. It is preferable to form the cutting lines at such portions where the core is less likely to undergo a force when an external force is applied to the soft-resin-molded body. For example, in the case of producing a soft-resin-molded body of a pediatric heart, the cutting lines can preferably be formed in the vicinity of the boundary between the right and left ventricles, or in the vicinity of the valve at the boundary between an atrium and a ventricle, on the inner and/or outer surface of the core.

### EXPLANATION OF NUMERALS

1... Soft-Resin-Molded Body
2... Cavity
3... Opening
4... Core

## Claims

1. A method for producing a resin-molded body for a hollow structure having a cavity and an opening connecting the cavity and an outside, including steps of:
a) creating a hollow core corresponding to a shape of the cavity;
b) creating an outer mold corresponding to an external shape of the hollow structure;
c) setting the core in the outer mold and injecting a fluid of a soft-resin material into a space formed between the outer mold and the core;
d) demolding a soft-resin-molded body together with the core from the outer mold after the soft-resin-molded body is formed by hardening the soft-resin material;
e) applying an external force to the soft-resin-molded body to deform the soft-resin-molded body so as to make the core smaller in size so that the core can pass through the opening; and
f) discharging the core through the opening of the soft-resin-molded body to the outside after making the core smaller in size.

2. The method for producing a resin-molded body for a hollow structure according to claim 1, wherein the step of applying an external force to the soft-resin-molded body to deform the soft-resin-molded body is performed in such a manner as to break the core into small pieces that can pass through the opening.

3. The method for producing a resin-molded body for a hollow structure according to claim 1 or 2, wherein a three-dimensional data of a contour shape of the cavity is created, and the core is created from a light-curing resin by a laser prototyping process based on the three-dimensional data.

4. The method for producing a resin-molded body for a hollow structure according to claim 3, wherein the three-dimensional data of the contour shape of the cavity is created from a tomographic data obtained by an MRI or CT scan of the hollow structure.

5. The method for producing a resin-molded body for a hollow structure according to one of claims 1-4, wherein the thickness of the core is equal to or smaller than 1 mm.

6. The method for producing a resin-molded body for a hollow structure according to one of claims 1-5, wherein the outer mold is created by steps of preparing a three-dimensional data of an external shape of the hollow structure, creating a light-curing resin-molded body having a same external shape as that of the hollow structure by a laser prototyping process based on the three-dimensional data, setting the light-curing resin-molded body in an outer frame, injecting a synthetic resin into a space between the outer frame and the light-curing resin-molded body, and extracting the light-curing resin-molded body after the synthetic resin is cured.

7. The method for producing a resin-molded body for a hollow structure according to claim 6, wherein the three-dimensional data of the external shape of the hollow structure is created from a tomographic data obtained by an MRI or CT scan of the hollow structure.

8. The method for producing a resin-molded body for a hollow structure according to one of claims 1-7, wherein the hollow structure is a heart.

9. A hollow core used for producing a soft-resin-molded body of a hollow structure having an opening, the core being designed to be set in an outer mold so as to produce the soft-resin-molded body by injecting a fluid soft-resin material into the space between the outer mold and the core and hardening the soft-resin material, wherein:
the core can be made to be smaller in size so that the core can pass through the opening by applying an external force to the soft-resin-molded body.

10. The hollow core according to claim 9, wherein the core, which can be made to be smaller in size so that the core can pass through the opening, is a core which can be broken into small pieces that can pass through the opening.

11. The hollow core according to claim 9 or 10, wherein the core is created by curing a light-curing resin material by a laser prototyping process.
